# EUROPÄISCHE PATENTSCHRIFT

(11) **EP 1 790 210 B1**
(45) Veröffentlichungstag und Bekanntmachung des Hinweises auf die Patenterteilung: **25.03.2009**
(21) Anmeldenummer: 06123979.4
(22) Anmeldetag: 14.11.2006
(51) Int. Cl.: A01F 29/10

(54) **Zuführeinrichtung für einen Feldhäcksler**
Feeding device for a forage harvester
Dispositif d'alimentation pour une faucheuse-hâcheuse

(30) Priorität: 24.11.2005 DE 102005055983
(43) Veröffentlichungstag der Anmeldung: 30.05.2007
(73) Patentinhaber: Deere & Company, Moline, IL 61265-8098 (US)
(72) Erfinder: Schäfer, Rainer, 66482 Zweibrücken (DE); Dold, Matthew George, 66399 Mandelbachtal (DE)
(74) Vertreter: Holst, Sönke

(56) Entgegenhaltungen:
- EP-A1- 0 519 209
- DE-A1- 19 539 143
- US-A- 4 073 377
- US-A1- 2003 033 792

## Beschreibung

Die Erfindung betrifft eine Zuführeinrichtung für einen Feldhäcksler, umfassend wenigstens eine drehbare untere Vorpresswalze, wenigstens eine drehbare obere Vorpresswalze, zwischen denen eine Erntegutmatte hindurch und zu einer Häckseleinrichtung führbar ist und einen fremdkraftbetätigten Verstellantrieb, mit dem die Position wenigstens einer der Vorpresswalzen gegenüber der anderen Vorpresswalze veränderlich ist.

### Stand der Technik

Feldhäcksler werden in der Landwirtschaft verwendet, um Erntegut mittels einer Erntegutaufnahmevorrichtung von einem Feld abzuschneiden oder aufzusammeln, über eine Zuführeinrichtung einer Häckseleinrichtung zuzuführen, in der Regel eine Häckseltrommel oder ein Scheibenradhäcksler, um es zu häckseln und es, in der Regel nach einer Beschleunigung mittels eines Gebläses, durch einen in seiner Position verstellbaren Auswurfkrümmer auf ein Transportfahrzeug auszutragen. Die geernteten Pflanzen werden in den meisten Fällen als Silage zum Verfüttern an Tiere oder seit einiger Zeit zur Biogasproduktion verwendet.

Die Zuführeinrichtung umfasst bei derzeit gebräuchlichen Feldhäckslern (s. DE 102 10 437 C) zwei untere, starr am Rahmen des Feldhäckslers gelagerte Vorpresswalzen und zwei mit diesen zusammenwirkende obere Vorpresswalzen. Die oberen Vorpresswalzen sind gegen die Kraft einer Feder oder mehrerer Federn höhenbeweglich gelagert, um beim Einzug von Erntegut nach oben ausweichen zu können. Die Feder hat die Aufgabe, die oberen Vorpresswalzen mit einer definierten Kraft zu beaufschlagen, damit die im Zusammenwirken mit den unteren Vorpresswalzen das Erntegut einerseits beim Einzug vorverdichten können und andererseits mit Hilfe dieser Walzenkraft den Einzug des Ernteguts und dessen Transport zur Häckseltrommel überhaupt erst möglich machen.

Aufgrund der Charakteristik mechanischer Federn ergibt sich im Wesentlichen eine lineare Abhängigkeit zwischen der Vorpresskraft und der Mattenhöhe. Das führt bei kleineren Mattenhöhen, wie sie insbesondere beim Ein- und Ausfahren aus dem Erntegutbestand auftreten, zu einer relativ geringen Vorpresskraft. Dadurch kommt es mitunter zu unerwünschten Überlängen im Häckselgut, da die Häckselmesser Pflanzen oder -teile aus der nicht hinreichend zwischen den beiden rückwärtigen Vorpresswalzen eingeklemmten Erntegutmatte herausziehen und ungeschnitten in den abgegebenen Erntegutstrom überführen können. Derartige Überlängen sind insbesondere bei der Biogasproduktion unerwünscht. Man könnte zwar die Vorspannung der Federn vergrößern, was jedoch zu vorzeitiger Materialermüdung der Federn und extrem hohem Anpressdruck bei größeren Mattenhöhen führt.

Die EP 0 519 209 A schlägt vor, zur Vermeidung von Eigenschwingungszuständen der oberen Vorpresswalzen ein als hydraulischen Stoßdämpfer ausgeführtes Dämpfungsglied mit den durch Federkraft nach unten vorgespannten Vorpresswalzen zu verbinden. Dieser Stoßdämpfer kann das oben geschilderte Problem der bei geringen Mattenhöhen entstehenden Überlängen nicht lösen.

Weiterhin wurde vorgeschlagen, den Anpressdruck der Vorpresswalzen hydraulisch zu erzeugen. In einem Prospekt "Model 7730 Self-Propelled Forage Harvester", Druckvermerk FQ-1-184, der Fa. Hesston Corporation, Hesston, Kansas, USA, wird ein Feldhäcksler mit einem Hydraulikzylinder zur Erzeugung des Vorpresswalzendrucks beschrieben. Der Hydraulikzylinder ist mit einem Druckspeicher verbunden, der ihn mit einem konstanten Druck beaufschlagt. Hier bleibt der Anpressdruck der Vorpresswalzen zwar - solange sich die Mattenhöhe nicht sprunghaft ändert - konstant, jedoch erlaubt es die Trägheit des Hydraulikzylinders nicht, die Vorpresswalze bei sich schnell ändernden Mattenhöhen hinreichend schnell nachzuführen, so dass auch hier unerwünschte Überlängen bei schnell absinkenden Mattenhöhen möglich sind. Bei schnell ansteigenden Mattenhöhen wirken relativ hohe Klemmkräfte, die zu hohen mechanischen Beanspruchungen der Vorpresswalzen führen. Diese Lösung hat sich in der Praxis nicht durchgesetzt.

Die DE 195 39 143 A schlägt ebenfalls eine hydraulische Erzeugung des Anpressdrucks der oberen Vorpresswalzen vor. Der doppelt wirkende Hydraulikzylinder ist mit einer Ventileinrichtung verbunden, die wiederum mit einer Steuerung verbunden ist. Die Steuerung stellt durch eine auf Messwerten von Sensoren, die den Arbeitsdruck im Hydraulikzylinder erfassen, basierende Ansteuerung der Ventileinrichtung den Druck im Hydraulikzylinder auf einen Solldruckwert ein. Der Solldruckwert kann von einer belastungs- und/oder erntegutabhängig gesteuerten Automatik bestimmt werden. Hier können zwar der Druck im Hydraulikzylinder und damit die Anpresskraft der oberen Vorpresswalzen abhängig von der Belastung des Feldhäckslers gesteuert werden, jedoch liegen die bezüglich des Feldhäckslers der Fa. Hesston genannten, durch die Trägheit des Hydraulikzylinders bedingten Nachteile auch hier vor.

Die US 2003/0033792 A beschreibt einen Feldhäcksler mit durch eine Feder gegeneinander vorgespannten Körnerprozessorvvalzen, deren Abstand durch einen Hydraulikzylinder verstellt wird.

### Aufgabe der Erfindung

Die der Erfindung zu Grunde liegende Aufgabe wird darin gesehen, eine Zuführeinrichtung für einen Feldhäcksler bereitzustellen, bei der auch bei kleineren Mattenhöhen eine hinreichende Vorpresskraft erzielt wird und die bei plötzlichen Änderungen der Mattenhöhe eine rasche Anpassung der Position der Vorpresswalze ermöglicht.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine Zuführeinrichtung eines Feldhäckslers umfasst wenigstens eine untere und eine obere Vorpresswalze. Eine der Vorpresswalzen ist mittels eines fremdkraftbetätigten Verstellantriebs gegen die andere Vorpresswalze bewegbar. Es wird vorgeschlagen, zwischen den beweglichen Ausgang des Verstellantriebs und die durch ihn bewegbare Vorpresswalze eine mechanische Feder anzuordnen, welche vorzugsweise die durch den Verstellantrieb bewegbare Vorpresswalze gegen die andere Vorpresswalze vorspannt.

Auf diese Weise kann durch eine geeignete Ansteuerung des Verstellantriebs ein von der Position der bewegbaren Vorpresswalze und somit vom Erntegutdurchsatz zumindest näherungsweise unabhängiger oder in beliebiger Weise vom Erntegutdurchsatz abhängiger Anpressdruck der bewegbaren Vorpresswalze erzeugt werden. Die Feder ermöglicht es der bewegbaren Vorpresswalze - unabhängig von der Trägheit des Verstellantriebs - schnelleren oder sprunghaften Änderungen der Mattenhöhe unmittelbar zu folgen. Dadurch ist auch bei kleinen Mattenhöhen ein hinreichender Anpressdruck erzielbar, was unerwünschte Überlängen des Häckselguts zu vermeiden hilft.

Als Feder wird vorzugsweise eine Zugfeder verwendet, d. h. eine Feder, deren wirkende Kraft mit wachsender Elongation der Feder ansteigt. Dadurch kann die Feder in kompakter Weise seitlich neben der Zuführeinrichtung angeordnet werden. Bei anderen Ausführungsformen kann jedoch auch eine Druckfeder Verwendung finden, die ober- bzw. unterhalb der bewegbaren Vorpresswalze angebracht werden kann.

Einen kompakten Aufbau der Zuführeinrichtung erreicht man, indem man ein erstes Ende der Feder mit der Vorpresswalze und ein zweites Ende der Feder mit einer schwenkbeweglichen und/oder verschiebbaren ersten Halterung verbindet, die weiterhin mit dem beweglichen Ausgang des Verstellantriebs verbunden ist. Durch diese Anordnung wird es möglich, die Feder und den Verstellantrieb nebeneinander anzuordnen, insbesondere zumindest näherungsweise parallel zueinander und/oder vertikal zu orientieren, insbesondere seitlich neben der Zuführeinrichtung.

Da in der Regel zwei (oder mehr) obere Vorpresswalzen beweglich angeordnet werden, während zwei (oder mehr) untere Vorpresswalzen starr am Rahmen des Feldhäckslers befestigt werden, bietet es sich an, die oberen Vorpresswalzen gemeinsam an einer Schwinge anzubringen, an der auch die sich von der Schwinge nach unten erstreckende Feder angreift. Der bewegliche Ausgang des Verstellantriebs kann dann an der beschriebenen Halterung angeschlossen und neben der Feder angeordnet werden, d. h. seitlich daneben oder in Vorwärtsrichtung davor oder dahinter.

Als Verstellantrieb kann in an sich bekannter Weise ein Hydraulikzylinder oder Hydraulikmotor dienen. Denkbar ist auch eine Verwendung eines Elektromotors oder eines pneumatischen Zylinders.

Der Verstellantrieb kann eingerichtet sein, einen konstanten - d. h. von der Position der Vorpresswalze unabhängigen - Anpressdruck der Vorpresswalze zu erzeugen, was beispielsweise dadurch erfolgen kann, dass man einen als Verstellantrieb dienenden Hydraulikzylinder mit einem Druckspeicher verbindet, der unter einem vorgegebenen oder veränderlichen (durch einen Bediener oder eine beliebige, z. B. die Art des Ernteguts erfassende Sensorik steuerbaren) Druck stehendes Hydraulikfluid zur Beaufschlagung des Hydraulikzylinders bereitstellt. Bei einer anderen Ausführungsform ist eine Steuerung mit dem Verstellantrieb und einem zur Erfassung des Erntegutdurchsatzes (z. B. der Mattenhöhe) eingerichteten Erntegutdurchsatzsensor verbunden, die den Verstellantrieb basierend auf der Ausgabe des Erntegutdurchsatzsensors veranlasst, sich derart zu bewegen, dass der Anpressdruck der Vorpresswalzen auf das Erntegut zumindest näherungsweise vom Erntegutdurchsatz unabhängig bleibt oder mit wachsendem Durchsatz nach einer beliebigen, geeigneten Kennlinie ansteigt. Der Durchgangsspalt zwischen den Vorpresswalzen wird demnach mit steigender Mattenhöhe vergrößert und mit sinkender Mattenhöhe verringert.

Der aktuelle Durchsatz kann mittels eines zur Erfassung der Position einer beweglichen Vorpresswalze ausgelegten Erntegutdurchsatzsensors erfasst werden. Es kann aber auch ein beliebiger anderer, zur Erfassung des Erntegutdurchsatzes geeigneter Erntegutdurchsatzsensor Verwendung finden, der z. B. die Belastung der Häckseleinrichtung oder des Gebläses oder des Erntevorsatzes erfasst oder die Höhe der Erntegutmatte optisch oder mechanisch bestimmt.

Wie bereits ausgeführt, kann die Steuerung den Verstellantrieb derart ansteuern, dass ein gewünschter Anpressdruck der Vorpresswalzen erzielt wird. Zu Regelungszwecken wäre es möglich, den in einem als Verstellantrieb dienenden Hydraulikzylinder herrschenden Druck zu erfassen und der Steuerung eine entsprechende Information zuzuführen. In diesem Fall würde die Steuerung den Druck im Hydraulikzylinder auf den gewünschten Wert regeln. Bei einer anderen Ausführungsform wird ein Federpositionssensor verwendet, um die Elongation der Feder zu erfassen, die ein Maß für die von der Feder auf die Vorpresswalze ausgeübte Kraft und für den Anpressdruck der Vorpresswalze ist. Das Signal des Federpositionssensors dient der Steuerung als Regeleingangsgröße zur Verstellung der Position des Verstellantriebs. Dazu kann ein von der Feder bewegtes Schiebe- oder Drehpotentiometer verwendet werden, das mit beiden Enden der Feder verbunden wird. Bei einer anderen Ausführungsform sind getrennte Sensoren zur Erfassung der Position der bewegbaren Vorpresswalze und des Verstellantriebs vorgesehen. Die Differenz der Signale der Sensoren enthält eine Information über die Elongation der Feder, die ebenfalls der Steuerung als Regeleingangsgröße zur Verstellung der Position des Verstellantriebs dient.

### Ausführungsbeispiel

In den Zeichnungen ist ein nachfolgend näher beschriebenes Ausführungsbeispiel der Erfindung dargestellt. Es zeigt:
- Fig. 1: einen Feldhäcksler mit einer Zuführeinrichtung in Seitenansicht und in schematischer Darstellung, und
- Fig. 2: eine schematische seitliche Ansicht der Zuführeinrichtung und ihrer Steuerung.

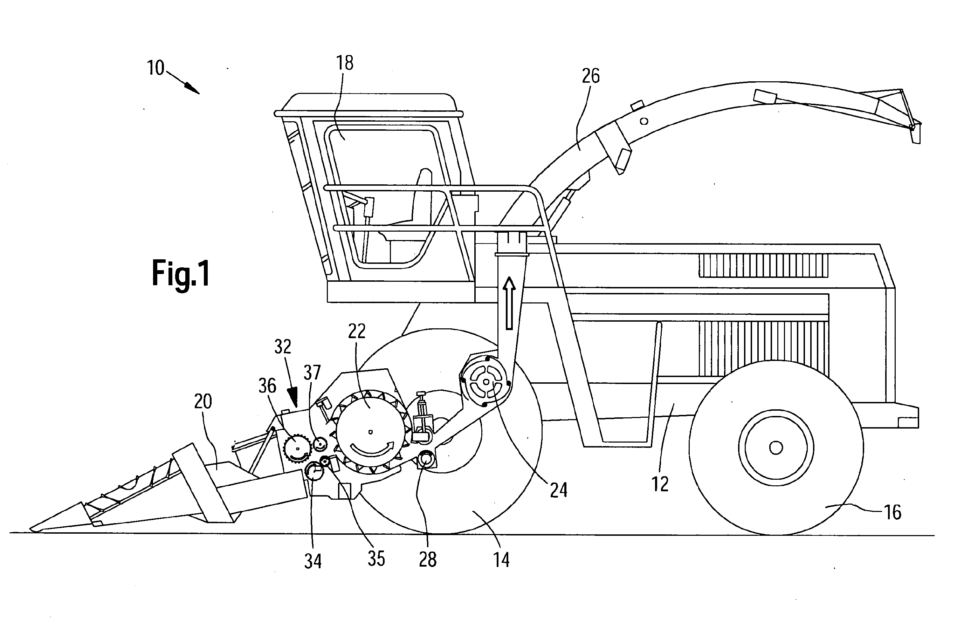

Ein in Figur 1 gezeigter selbst fahrender Feldhäcksler 10 baut sich auf einem Rahmen 12 auf, der von vorderen antreibbaren und lenkbaren rückwärtigen Rädern 14 und 16 getragen wird. Die Bedienung des Feldhäckslers 10 erfolgt von einer Fahrerkabine 18 aus, von der aus eine im vorliegenden Ausführungsbeispiel als Maismähvorsatz ausgebildete Erntegutaufnahmevorrichtung 20 einsehbar ist. Mittels der Erntegutaufnahmevorrichtung 20 vom Boden aufgenommenes Gut, z. B. Mais, Gras oder dergleichen wird durch eine in einem Einzugskanal des Feldhäckslers 10 angeordnete Zuführeinrichtung 32 mit unteren Vorpresswalzen 34, 35 und oberen Vorpresswalzen 36, 37 einer Häckseleinrichtung 22 in Form einer Häckseltrommel zugeführt, die es in kleine Stücke häckselt und es einer Fördervorrichtung 24 aufgibt. Das Gut verlässt den Feldhäcksler 10 zu einem nebenher fahrenden Anhänger oder anderen Transportfahrzeug über einen drehbaren Austragsschacht 26. Zwischen der Häckseleinrichtung 22 und der Fördervorrichtung 24 ist eine aus zwei übereinander angeordneten Prozessorwalzen aufgebaute Nachzerkleinerungsvorrichtung 28 angeordnet, durch die das zu fördernde Gut der Fördervorrichtung 24 tangential zugeführt wird.

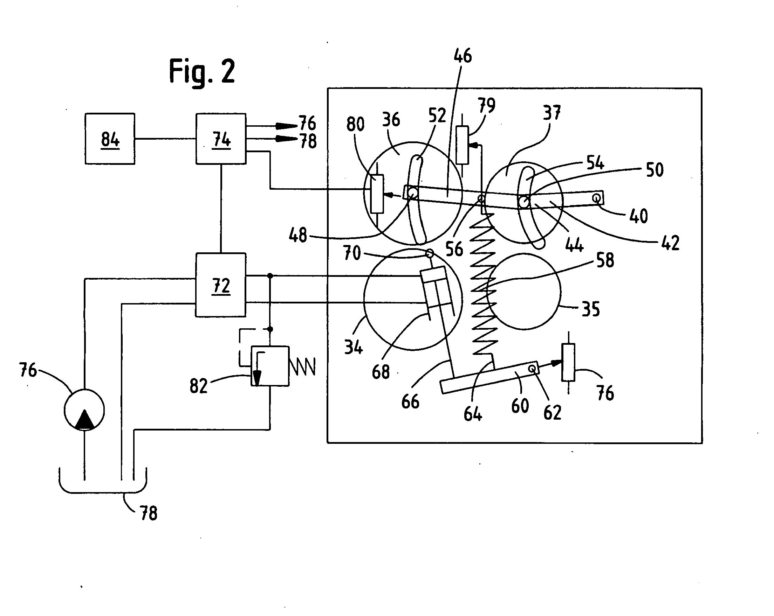

Die Figur 2 zeigt eine schematische Darstellung der Zuführeinrichtung 32. Die unteren Vorpresswalzen 34, 35 sind drehbar an einem am Rahmen 12 des Feldhäckslers 10 abnehmbar befestigten Einzugsgehäuse gelagert und werden im Erntebetrieb mittels eines Schnittlängengetriebes (nicht gezeigt, s. jedoch DE 102 07 467 A, deren Offenbarung durch Verweis mit in die vorliegenden Unterlagen aufgenommen wird) in Drehung versetzt. An Drehpunkten 40 sind beidseits des Einzugsgehäuses 38 Schwenkelemente 42 um parallel zur Drehachse der Vorpresswalzen 34-37 verlaufende Achsen drehbar gelagert. An deren freien Enden 44 sind Schwingen 46 ebenfalls um parallel zur Drehachse der Vorpresswalzen 34-37 verlaufende Achsen drehbar gelagert. Diese haben jeweils eine vordere Lagerstelle 48 und eine hintere Lagerstelle 50, in denen Wellen der oberen Vorpresswalzen 36, 37 drehbar gelagert sind. Die Wellen der oberen Vorpresswalzen 36, 37 können sich mit der Halterung 46 im Bereich von Schlitzen 52, 54, die sich im Einzugsgehäuse 38 befinden, frei nach oben und unten bewegen. Die Wellen der oberen Vorpresswalzen 36, 37 werden im Erntebetrieb ebenfalls durch das Schnittlängengetriebe angetrieben, gegensinnig zu den unteren Vorpresswalzen 34, 35.

An der Schwinge 46 ist ein erstes Ende 56 einer als Schraubenfeder ausgeführten Feder 58 befestigt, deren zweites Ende 64 an einer Halterung 60 angebracht ist. Die Halterung 60 ist an ihrem rückwärtigen Ende um eine parallel zur Drehachse der Vorpresswalzen 34-37 verlaufende Achse 62 schwenkbar am Einzugsgehäuse 38 angelenkt. Die Feder 58 erstreckt sich von der Schwinge 46 näherungsweise vertikal nach unten. An der Halterung 60 ist weiterhin ein beweglicher Ausgang 66 eines Verstellantriebs 68 angelenkt, dessen Gehäuse an einem Drehpunkt 70 am Einzugsgehäuse 38 angelenkt ist, dessen Achse parallel zur Drehachse der Vorpresswalzen 34-37 verläuft und sich oberhalb der Halterung 60 befindet, so dass der Verstellantrieb 68 sich in Fahrtrichtung des Feldhäckslers 10 vor der Feder 58 befindet und sich etwa parallel zu ihr erstreckt. Anders als dargestellt, könnte der Verstellantrieb 68 auch hinter der Feder 58 oder quer zur Fahrtrichtung des Feldhäckslers 10 seitlich neben der Feder 58 angeordnet sein.

Es können sich Federn 58 und Verstellantriebe 68 an beiden Seiten des Einzugsgehäuses 38 befinden. Bei einer anderen Ausführungsform befinden sich nur auf einer Seite des Einzugsgehäuses 38 eine Feder 58 und ein Verstellantrieb 68, wobei die Schwingen 46 auf beiden Seiten des Einzugsgehäuses 38 untereinander durch eine Querverbindung verbunden sind. Es können auch zwei Federn 58 an beiden Seiten des Einzugsgehäuses 38 verwendet werden, deren zweite Enden 64 miteinander und mit einem einzigen, auf einer Seite des Einzugsgehäuses 38 angeordneten Verstellantrieb 68 verbunden werden.

Der Verstellantrieb 68 ist in der dargestellten Ausführungsform ein doppelt wirkender Hydraulikzylinder, dessen Kammern über einen Ventilzusammenbau 72 mit einer Quelle 76 (hier eine Pumpe, die auch mit einem Druckspeicher verbunden werden könnte) unter Druck stehenden Hydraulikfluids und einem Tank 78 verbindbar sind. Der Ventilzusammenbau 72 ist durch eine elektronische Steuerung 74 elektromagnetisch betätigbar. Die Steuerung 74 ist mit einem ersten Sensor 76 in Form eines an der Achse 62 befestigten Potentiometers verbunden, welches den aktuellen Drehwinkel der Halterung 60 um die Achse 62 erfasst. Ein zweiter, mit der Steuerung 74 verbundener Sensor 79 in Form eines in unmittelbarer Nachbarschaft des ersten Endes 56 der Feder 58 mit der Schwinge 46 verbundenen Dreh- oder Schiebepotentiometers erfasst die Position der Schwinge 46. Ein dritter, mit der Steuerung 74 verbundener Erntegutdurchsatzsensor 80 in Form eines in unmittelbarer Nachbarschaft der Welle der vorderen Vorpresswalze 36 mit der Schwinge 46 verbundenen Dreh- oder Schiebepotentiometers erfasst die Position der vorderen Vorpresswalze 36.

Nach alledem ergibt sich folgende Arbeitsweise der Zuführeinrichtung 32. Die oberen Vorpresswalzen 36, 37 sind relativ zu den unteren Vorpresswalzen 34, 35 bewegbar angeordnet und werden durch die Kraft der Feder 58 nach unten vorgespannt und gegen letztere gepresst. Der Verstellantrieb 68 ermöglicht durch Verstellung der Position der Halterung 60 eine Variation der Elongation und somit der Kraft der Feder 58, was eine Veränderung des Anpressdrucks der oberen Vorpresswalzen 36, 37 zur Folge hat.

Die Steuerung 74 erhält anhand des Ausgangssignals des Erntegutdurchsatzsensors 80 eine Information über die jeweilige Erntegutmattenhöhe, die zum Durchsatz proportional ist. Außerdem erhält die Steuerung 74 anhand der Signale der Sensoren 76, 79 durch Differenzbildung eine Information über die Elongation der Feder 58, welche wiederum eine Information über den geltenden Anpressdruck der Vorpresswalzen auf das Erntegut enthält. Bei der Berechnung der Erntegutmattenhöhe anhand des Signals des Erntegutdurchsatzsensors 80 kann die Steuerung 74 auch die Signale der Sensoren 76, 79 berücksichtigen, um den Einfluss der Position des Verstellantriebs 68 und die Kraft der Feder 58 auf die Position der vorderen Vorpresswalze 36 zu kompensieren, wobei auch durch den Bediener eingegebene oder durch Sensoren (z. B. 76 und 79) erfasste Erntegutparameter (z. B. Feuchtigkeit und/oder Kompressibilität) berücksichtigt werden können, die den Zusammenhang zwischen der Menge einlaufenden Ernteguts, der Position der Vorpresswalze 36 und der Elongation der Feder 58 beeinflussen. Anstelle der Sensoren 76, 79 oder zusätzlich dazu kann ein Drucksensor zur Erfassung des in der Kolbenkammer des Verstellantriebs 68 herrschenden Drucks vorgesehen sein. Die Steuerung 74 berechnet anhand der (mittels des Signals des Erntegutdurchsatzsensors 80 berechneten) Mattenhöhe einen Sollwert für den Anpressdruck. Dabei können beliebige Kennlinien verwendet werden, die als Tabellen, Kurven, Listen oder funktionale Zusammenhänge softwaremäßig abgespeichert werden können.

Es kann eine Bedienereingabeeinrichtung 84 vorgesehen sein, mit welcher Parameter der Kennlinie zur Berechnung des Sollwerts des Anpressdrucks als Funktion der Mattenhöhe durch einen Bediener eingegeben werden können. So kann der Anpressdruck bei minimaler und maximaler Mattenhöhe bzw. der Anpressdruck bei minimaler Mattenhöhe und der Anstieg des Anpressdrucks mit der Mattenhöhe eingegeben werden. Diese Kennlinie könnte auch durch die Steuerung 74 abhängig vom Erntegut und dessen Eigenschaften (z. B. Art des Ernteguts und Feuchtigkeit) ausgewählt werden, die durch den Bediener eingegeben oder mittels geeigneter Sensoren erfasst werden können. Um übermäßig hohe Anpressdrücke zu vermeiden, kann der maximale Anpressdruck softwareseitig begrenzt werden. Ein weiterer Parameter zur Bestimmung der Kennlinie ist die Breite der Zuführeinrichtung 32, welche werksseitig in die Steuerung 74 einprogrammierbar sein kann.

Als vorteilhaft erweist sich ein linearer Anstieg des Anpressdrucks mit der Erntegutmattenhöhe mit einer relativ geringen Steigung und einem hinreichend hohen Anpressdruck bei geringen Mattenhöhen. Es wäre auch ein von der Mattenhöhe unabhängiger, konstanter Anpressdruck denkbar. Die Steuerung 74 vergleicht dann den errechneten Sollwert des Anpressdrucks mit dem anhand der Sensoren 76, 79 gemessenen Istwert und kontrolliert den Ventilzusammenbau 72 und über diesen den Verstellantrieb 68 derart, dass der Istwert zumindest näherungsweise erreicht wird.

Um bei einem Einzug von Fremdkörpern Beschädigungen der Zuführeinrichtung 32 zu vermeiden, ist die Kolbenkammer des Verstellantriebs 68 mit einem Druckbegrenzungsventil 82 verbunden, das in einem derartigen Fall den Druck in den Tank 78 ablässt. Ein derartiger Fall wird anhand des Erntegutdurchsatzsensors 80 auch durch die Steuerung 74 erkannt, die dann eine (in an sich bekannter Weise, s. DE 199 55 901 A und dort zitierter Stand der Technik) mit einem Metalldetektor verbundene Sperreinrichtung aktivieren kann, welche die Zuführeinrichtung 32 zwecks Vermeidens von Schäden an den stromab liegenden Elementen des Feldhäckslers 10 blockieren kann.

## Patentansprüche

1. Zuführeinrichtung (32) für einen Feldhäcksler (10), umfassend:
wenigstens eine drehbare untere Vorpresswalze (34, 35),
wenigstens eine drehbare obere Vorpresswalze (36, 37), zwischen denen eine Emtegutmatte hindurch und zu einer Häckseleinrichtung (22) führbar ist,
und einen fremdkraftbetätigten Verstellantrieb (68), mit dem die Position wenigstens einer der Vorpresswalzen (36, 37) gegenüber der anderen Vorpresswalze (34, 35) veränderlich ist,
**dadurch gekennzeichnet, dass** zwischen dem Verstellantrieb (68) und der von ihm bewegbaren Vorpresswalze (36, 37) eine Feder (58) angeordnet ist.

2. Zuführeinrichtung (32) nach Anspruch 1, **dadurch gekennzeichnet, dass** die Feder (58) die mit dem Verstellantrieb (68) verbundene Vorpresswalze (36, 37) gegen die andere Vorpresswalze (34, 35) vorspannt.

3. Zuführeinrichtung (32) nach Anspruch 1 oder 2, **dadurch gekennzeichnet, dass** die Feder (58) eine Zugfeder ist.

4. Zuführeinrichtung (32) nach einem der Ansprüche 1 bis 3, **dadurch gekennzeichnet, dass** ein erstes Ende (56) der Feder (58) mit der Vorpresswalze (36, 37) und ein zweites Ende der Feder (58) mit einer schwenkbeweglichen und/oder verschiebbaren Halterung (60) verbunden ist, die weiterhin mit dem beweglichen Ausgang (66) des Verstellantriebs (68) verbunden ist.

5. Zuführeinrichtung (32) nach einem der Ansprüche 1 bis 4, **dadurch gekennzeichnet, dass** der Verstellantrieb (68) und die Feder (58) nebeneinander angeordnet sind.

6. Zuführeinrichtung (32) nach einem der Ansprüche 1 bis 5, **dadurch gekennzeichnet, dass** der Verstellantrieb (68) und die Feder (58) sich zumindest näherungsweise vertikal erstrecken.

7. Zuführeinrichtung (32) nach einem der Ansprüche 1 bis 6, **dadurch gekennzeichnet, dass** zwei obere Vorpresswalzen (36, 37) vorhanden sind, die an einer gemeinsamen Schwinge (46) angebracht sind, und an der die sich nach unten erstreckende Feder (58) angreift.

8. Zuführeinrichtung (32) nach einem der vorhergehenden Ansprüche, **gekennzeichnet durch** eine mit dem Verstellantrieb (68) verbundene Steuerung (74), die betreibbar ist, den Anpressdruck der Vorpresswalzen (36, 37) auf das Erntegut zumindest näherungsweise vom Erntegutdurchsatz unabhängig zu halten oder mit wachsendem Durchsatz ansteigen zu lassen.

9. Zuführeinrichtung (32) nach Anspruch 8, **dadurch gekennzeichnet, dass** die Steuerung (74) mit einem zur Erfassung des Erntegutdurchsatzes eingerichteten Erntegutdurchsatzsensor (80) verbunden und betreibbar ist, den Verstellantrieb (68) abhängig von einer Ausgabe des Erntegutdurchsatzsensors (80) derart anzutreiben, dass der Anpressdruck der Vorpresswalzen (34-37) auf das Erntegut zumindest näherungsweise konstant bleibt oder mit wachsendem Durchsatz ansteigt.

10. Zuführeinrichtung (10) nach Anspruch 9, **dadurch gekennzeichnet, dass** der Erntegutdurchsatzsensor (80) zur Erfassung der Position einer beweglichen Vorpresswalze (36) ausgelegt ist.

11. Zuführeinrichtung (10) nach einem der Ansprüche 8 bis 10, **dadurch gekennzeichnet, dass** die Steuerung (74) mit einem zur Erfassung der Elongation der Feder (58) eingerichteten Federpositionssensor (76, 79) verbunden ist, dessen Ausgabe von der Steuerung (74) als Istwert für den jeweiligen Anpressdruck der Vorpresswalzen (34-37) auf das Erntegut verwendbar ist.

12. Zuführeinrichtung (10) nach einem der Ansprüche 8 bis 11, **dadurch gekennzeichnet, dass** die Steuerung (74) mit einer Bedienereingabeeinrichtung (84) zur Eingabe von Parametern einer Kennlinie zur Berechnung des Sollwerts des Anpressdrucks der Vorpresswalzen (34-37) als Funktion der Mattenhöhe und/oder einem Sensor (76, 79, 80) zur Erfassung von Eigenschaften des Ernteguts verbunden ist, dessen Signal zur Berechnung von Parametern einer Kennlinie zur Berechnung des Sollwerts des Anpressdrucks der Vorpresswalzen (34-37) als Funktion der Mattenhöhe verwendet wird.

13. Feldhäcksler (10) mit einer Zuführeinrichtung (32) nach einem der Ansprüche 1 bis 12.

## Claims

1. Feeding device (32) for a forage harvester (10), comprising: at least one rotatable lower precompacting roller (34, 35), at least one rotatable upper precompacting roller (36, 37), between which a crop mat can be fed through and to a chopping device (22), and a power-operated adjustment drive (68), with which the position of at least one of the precompacting rollers (36, 37) can be varied relative to the other precompacting roller (34, 35), **characterized in that** a spring (58) is disposed between the adjustment drive (68) and the precompacting roller (36, 37) which can be moved by the same.

2. Feeding device (32) according to Claim 1, **characterized in that** the spring (58) pretensions the precompacting roller (36, 37) connected to the adjustment drive (68) against the other precompacting roller (34, 35).

3. Feeding device (32) according to Claim 1 or 2, **characterized in that** the spring (58) is a tension spring.

4. Feeding device (32) according to one of Claims 1 to 3, **characterized in that** a first end (56) of the spring (58) is connected to the precompacting roller (36, 37) and a second end of the spring (58) is connected to a pivotably movable and/or displaceable mounting (60), which is further connected to the movable output (66) of the adjustment drive (68).

5. Feeding device (32) according to one of Claims 1 to 4, **characterized in that** the adjustment drive (68) and the spring (58) are arranged one beside the other.

6. Feeding device (32) according to one of Claims 1 to 5, **characterized in that** the adjustment drive (68) and the spring (58) extend at least approximately vertically.

7. Feeding device (32) according to one of Claims 1 to 6, **characterized in that** two upper precompacting rollers (36, 37) are present, which are attached to a common rocker arm (46) and which are acted upon by the downwardly extending spring (58).

8. Feeding device (32) according to one of the preceding claims, **characterized by** a control system (74) which is connected to the adjustment drive (68) and can be operated to keep the contact pressure of the precompacting rollers (36, 37) upon the crop at least approximately independent of the crop throughput, or to make it rise with increasing throughput.

9. Feeding device (32) according to Claim 8, **characterized in that** the control system (74) is connected to a crop throughput sensor (80) set up to register the crop throughput and can be operated to drive the adjustment drive (68), in dependence on an output of the crop throughput sensor (80), in such a way that the contact pressure of the precompacting rollers (34-37) upon the crop remains at least partially constant or rises with increasing throughput.

10. Feeding device (10) according to Claim 9, **characterized in that** the crop throughput sensor (80) is designed to register the position of a movable precompacting roller (36).

11. Feeding device (10) according to one of Claims 8 to 10, **characterized in that** the control system (74) is connected to a spring position sensor (76, 79) which is set up to register the elongation of the spring (58) and the output of which can be used by the control system (74) as the actual value for the respective contact pressure of the precompacting rollers (34, 37) upon the crop.

12. Feeding device (10) according to one of Claims 8 to 11, **characterized in that** the control system (74) is connected to an operator input device (84) for the input of parameters of a characteristic curve for calculating the desired value of the contact pressure of the precompacting rollers (34-37) as a function of the mat height, and/or to a sensor (76, 79, 80) for registering crop characteristics, the signal of which sensor is used to calculate parameters of a characteristic curve for calculating the desired value of the contact pressure of the precompacting rollers (34-37) as a function of the mat height.

13. Forage harvester (10) having a feeding device (32) according to one of Claims 1 to 12.

## Revendications

1. Dispositif d'alimentation (32) pour une faucheuse-hacheuse (10), comprenant :
au moins un rouleau de pré-pressage inférieur rotatif (34, 35),
au moins un rouleau de pré-pressage supérieur rotatif (36, 37), entre lesquels un matelas de produit de récolte peut être guidé jusqu'à un dispositif faucheur-hacheur (22), et
un entraînement de réglage (68) commandé par une force extérieure, avec lequel la position d'au moins l'un des rouleaux de pré-pressage (36, 37) peut être modifiée par rapport à l'autre rouleau de pré-pressage (34, 35),
**caractérisé en ce qu'**un ressort (58) est disposé entre l'entraînement de réglage (68) et le rouleau de pré-pressage (36, 37) qu'il peut déplacer.

2. Dispositif d'alimentation (32) selon la revendication 1, **caractérisé en ce que** le ressort (58) précontraint le rouleau de pré-pressage (36, 37) connecté à l'entraînement de réglage (68) contre l'autre rouleau de pré-pressage (34, 35).

3. Dispositif d'alimentation (32) selon la revendication 1 ou 2, **caractérisé en ce que** le ressort (58) est un ressort de traction.

4. Dispositif d'alimentation (32) selon l'une quelconque des revendications 1 à 3, **caractérisé en ce qu'**une première extrémité (56) du ressort (58) est connectée au rouleau de pré-pressage (36, 37) et une deuxième extrémité du ressort (58) est connectée à une fixation (60) pivotante et/ou coulissante, qui est en outre connectée à la sortie mobile (66) de l'entraînement de réglage (68).

5. Dispositif d'alimentation (32) selon l'une quelconque des revendications 1 à 4, **caractérisé en ce que** l'entraînement de réglage (68) et le ressort (58) sont disposés l'un à côté de l'autre.

6. Dispositif d'alimentation (32) selon l'une quelconque des revendications 1 à 5, **caractérisé en ce que** l'entraînement de réglage (68) et le ressort (58) s'étendent au moins approximativement verticalement.

7. Dispositif d'alimentation (32) selon l'une quelconque des revendications 1 à 6, **caractérisé en ce que** deux rouleaux de pré-pressage supérieurs (36, 37) sont prévus, lesquels sont montés sur une bielle commune (46) et sur laquelle le ressort (58) s'étendant vers le bas vient en prise.

8. Dispositif d'alimentation (32) selon l'une quelconque des revendications précédentes, **caractérisé par** une commande (74) connectée à l'entraînement de réglage (68), qui peut fonctionner pour maintenir la pression d'application des rouleaux de pré-pressage (36, 37) sur le produit de récolte au moins approximativement indépendante du débit du produit de récolte, ou pour faire augmenter la pression d'application en fonction de l'augmentation du débit.

9. Dispositif d'alimentation (32) selon la revendication 8, **caractérisé en ce que** la commande (74) est connectée à un capteur de débit de produit de récolte (80) prévu pour détecter le débit du produit de récolte, et peut fonctionner de manière à entraîner l'entraînement de réglage (68) en fonction d'une sortie du capteur de débit de produit de récolte (80), de telle sorte que la pression d'application des rouleaux de pré-pressage (34 - 37) sur le produit de récolte reste au moins approximativement constante ou augmente avec l'augmentation du débit.

10. Dispositif d'alimentation (32) selon la revendication 9, **caractérisé en ce que** le capteur de débit de produit de récolte (80) est conçu pour détecter la position d'un rouleau de pré-pressage mobile (36).

11. Dispositif d'alimentation (32) selon l'une quelconque des revendications 8 à 10, **caractérisé en ce que** la commande (74) est connectée à un capteur de position de ressort (76, 79) prévu pour détecter l'allongement du ressort (58), dont la sortie peut être utilisée par la commande (74) en tant que valeur réelle pour la pression d'application respective des rouleaux de pré-pressage (34 - 37) sur le produit de récolte.

12. Dispositif d'alimentation (32) selon l'une quelconque des revendications 8 à 11, **caractérisé en ce que** la commande (74) est connectée à un dispositif d'entrée de commande (84) pour entrer des paramètres d'une caractéristique pour calculer la valeur de consigne de la pression d'application des rouleaux de pré-pressage (34 - 37) en fonction de la hauteur du matelas et/ou est connectée à un capteur (76, 79, 80) pour détecter des propriétés du produit de récolte, dont le signal est utilisé pour calculer des paramètres d'une caractéristique pour le calcul de la valeur de consigne de la pression d'application des rouleaux de pré-pressage (34 - 37) en fonction de la hauteur du matelas.

13. Faucheuse-hacheuse (10) comprenant un dispositif d'alimentation (32) selon l'une quelconque des revendications 1 à 12.
